# FASCICULE DE BREVET EUROPEEN

(11) **EP 2 157 250 B1**
(45) Date de publication et mention de la délivrance du brevet: **10.11.2010**
(21) Numéro de dépôt: 09290622.1
(22) Date de dépôt: 12.08.2009
(51) Int. Cl.: E03D 3/12, F16K 21/12

(54) **Robinet à déclenchement souple et à double temporisation pour fluide**
Flexibler Auslösehahn mit zweifacher Zeitverzögerung für Flüssigkeit
Tap with flexible operation and dual delay timer for fluid delivering

(30) Priorité: 12.08.2008 FR 0804565
(43) Date de publication de la demande: 24.02.2010
(73) Titulaire: Delabie, 80534 Friville (FR)
(72) Inventeur: Barge, Eric, 76470 Le Tréport (FR)
(74) Mandataire: Hammond, William

(56) Documents cités:
- EP-A- 0 264 638
- EP-A- 0 312 750
- EP-A- 1 498 553
- DE-A1- 3 834 328
- DE-A1- 4 033 009

## Description

La présente invention concerne un robinet à déclenchement souple et à double temporisation pour fluide comme, par exemple, pour délivrer de l'eau à des appareils sanitaires tels que des cuvettes de water-closets.

Le document DE-A- 40 33 009 décrit un robinet conforme au préambule de la revendication 1.

Dans le document FR-475.993-A est décrit un robinet de chasse d'eau avec déclenchement d'ouverture du clapet principal par un clapet auxiliaire de décompression et contrôle de la vitesse de fermeture du clapet principal par un canal auxiliaire calibré.

Le document EP-264638-A concerne un robinet de chasse d'eau avec commande d'ouverture du clapet principal par un clapet auxiliaire de décompression dont la fermeture est provoquée par la remontée du piston portant le clapet principal.

Ces dispositifs de l'art antérieur ne permettent pas de faire varier le volume d'eau délivré suivant la convenance de l'utilisateur de manière simple et économique.

Aussi un des buts de la présente invention est-il de fournir un robinet pour fluide qui permet de délivrer deux volumes de fluide, telle que de l'eau, différents par la réalisation de deux temporisations différentes pendant lesquelles le fluide s'écoule, et cela grâce à un mécanisme simple commandé par deux boutons.

Ce but, ainsi que d'autres qui apparaîtront par la suite,est atteint par un robinet à déclenchement souple et à double temporisation pour fluide comme, par exemple, pour délivrer de l'eau à des appareils sanitaires tels que des cuvettes de water-closets, qui comprend un mécanisme disposé dans le corps du robinet comportant un bouton-poussoir avec au moins deux parties actives pour actionner l'ouverture du robinet, une chambre de temporisation limitée par une chemise de temporisation dans laquelle coulisse un piston de temporisation qui porte un clapet principal venant en appui sur un siège principal du robinet et un double système de clapets de décompression permettant deux temporisations différentes, lequel robinet est caractérisé, selon la présente invention, par le fait qu'il comporte, d'une part, un guide-tige à l'intérieur duquel coulisse axialement une tige de commande et dont la partie inférieure renferme des sièges auxiliaires de ce robinet, la partie inférieure de la tige de commande portant des clapets auxiliaires primaire et secondaire, et, d'autre part, deux canaux de décompression primaire et secondaire qui sont ménagés dans la partie inférieure du guide-tige en amont des sièges auxiliaires primaire et secondaire.

Avantageusement, la longueur de la portée du siège auxiliaire primaire au-dessous du clapet primaire est inférieure à celle de la portée du siège auxiliaire secondaire au-dessous du clapet secondaire.

De préférence, le piston de temporisation comporte, de manière connue, un joint à lèvre faisant effet de joint racleur à l'intérieur de la chemise de temporisation et supporte un autre joint qui assure l'étanchéité avec la partie inférieure du guide-tige et qui vient obstruer, à un moment, au moins un des canaux de décompression de la chambre de temporisation.

Avantageusement, le guide-tige est vissé dans le corps de tête et pénètre dans la chambre de temporisation permettant ainsi de faire varier la position de la butée haute du piston, ce qui change la durée de temporisation longue et permet un réglage accessible à l'utilisateur du volume de fluide fourni.

La description qui va suivre et qui ne comporte aucun caractère limitatif, est relatif à un exemple de réalisation de la présente invention et doit être lue en regard des figures annexées, parmi lesquelles :
- la figure 1 est une vue en coupe longitudinale d'un robinet à déclenchement souple et à double temporisation pour fluide selon la présente invention, en position fermée ;
- la figure 2 est une vue en coupe longitudinale du robinet selon la figure 1 en position de fin de remontée en temporisation courte;
- la figure 3 est une vue en coupe longitudinale du robinet selon la figure 1 en position de fin de remontée en temporisation longue ;
- la figure 4 est une vue en coupe longitudinale du robinet selon la figure 1 en position de temporisation longue en cours de fermeture;

Ainsi qu'on peut le voir sur ces figures, un robinet à déclenchement souple et à double temporisation pour fluide, selon la présente invention, comprend, notamment, un corps 1, dans lequel est vissée une cartouche monobloc 2.

Le corps 1, de forme générale cylindrique, est muni d'une arrivée 1a de fluide sous pression, telle que l'eau fournie par un réseau d'approvisionnement sous pression, et une sortie 1b de ce fluide. La cartouche monobloc 2, elle-même de forme générale cylindrique, est, dans le présent exemple de réalisation, de même axe que la sortie 1 b de fluide.

La cartouche 2 comprend, d'une part, une première partie 21 constituant un corps de tête de forme cylindrique vissé dans le corps 1, et , d'autre part, une seconde partie vissée dans ce corps de tête 21 et constituant un guide-tige 6 de forme tubulaire. Elle comporte également un bouton-poussoir 3 constitué de deux parties concentriques selon cet exemple de réalisation : un bouton-poussoir de temporisation longue 4 disposé au centre d'un bouton de temporisation courte 5 muni d'un ressort de rappel 16.

Dans le corps 1 et sous le guide-tige 6, est située une chambre de temporisation 11a qui est délimitée par une chemise de temporisation 11 qui prolonge le corps de tête 21 à l'intérieur du corps 1. Dans cette chambre de temporisation 11a est situé un piston de temporisation 13 qui porte le clapet principal 20 du robinet, ce piston est guidé par la partie basse du guide-tige 6. La paroi interne de la chambre de temporisation 11a comporte, de façon connue, une ou plusieurs rainures de temporisation 11 b calibrant l'admission d'eau afin de contrôler la temporisation et la vitesse de fermeture du clapet principal 20 : ce piston 13 disposant de manière connue à sa périphérie un joint à lèvre 15 assurant son étanchéité au contact de la chemise de temporisation 11 sauf à l'emplacement de la ou des rainure(s) de temporisation 11 b.

Le guide-tige 6 est traversé axialement par une tige de commande 12 solidaire à une de ses extrémités du bouton 4 de temporisation longue.

Cette tige de commande12 comporte, sous le bouton de temporisation longue 4, une bague 7 constituant une butée pour le bouton de temporisation courte 5, comme cela sera expliqué plus loin. Autour de cette tige de commande 12 sont disposés deux ressorts de rappel: le premier 16 entre le fond du guide-tige 6 et le dessous du bouton de temporisation courte 5, et le second 8 entre le fond du guide-tige 6 et la bague 7.

A l'extrémité libre du guide-tige 6 est situé, comme dit précédemment, le piston de temporisation 13 qui peut coulisser le long de ce guide-tige 6 dans la chambre de temporisation 11a, et ce de façon étanche, entre une position basse de fermeture dans laquelle ce piston de temporisation 13 obstrue totalement l'arrivée d'eau 1a sous pression et la sortie d'eau 1b, et une position haute dans laquelle le piston de temporisation 13 vient en butée contre le fond 6a, formant butée, du guide-tige 6. Lorsque le piston de temporisation 13 est en position basse, son extrémité inférieure portant le clapet principal 20 du robinet est en appui sur le siège principal 1c de ce robinet.

Autour de ce guide-tige 6 est disposé un troisième ressort de rappel 17 entre le piston de temporisation 13 et le fond 6a du guide-tige 6 pour assurer la course de fermeture du piston vers le siège 1c.

Le guide-tige 6 comporte, prés de sa butée 6a, au moins un canal de décompression secondaire 6b pour temporisation longue et à une certaine distance de celui-ci au moins un canal de décompression primaire 6c pour temporisation courte. Dans sa partie interne le guide-tige 6 comporte deux élargissements: le premier sous le canal de décompression secondaire 6b constituant le siège auxiliaire secondaire 6d pour temporisation longue, et le second sous le canal de décompression primaire 6c constituant le siège auxiliaire primaire 6e pour temporisation courte. Quant à la tige de commande 12, elle supporte les clapets auxiliaires primaire 9 et secondaire 10 coopérant respectivement avec le siège auxiliaire primaire 6e et le siège auxiliaire secondaire 6d.

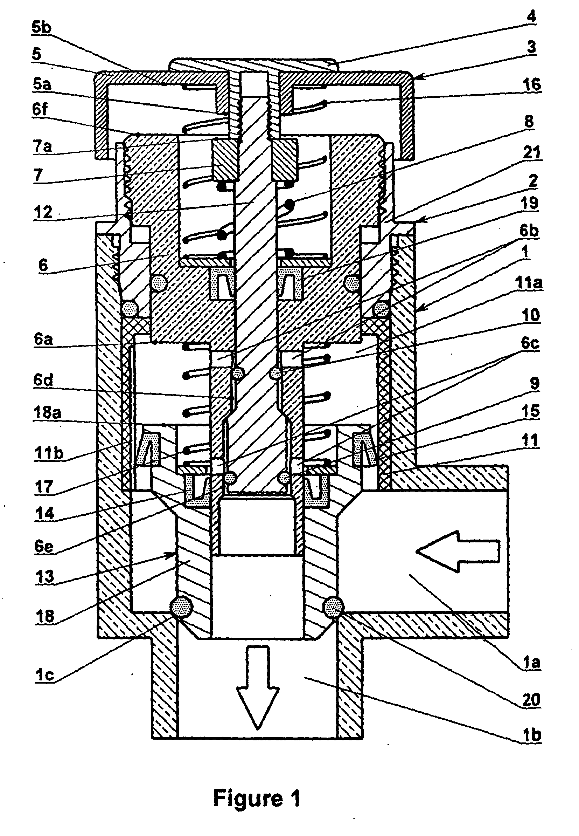

Lorsque le robinet est en position de fermeture (figure 1), le clapet principal 20 du piston de temporisation 13 repose sur le siège principal 1c du robinet: la sortie d'eau 1 b est obstruée, les canaux de décompression primaire 6c et secondaire 6b sont fermés et tous les ressorts de rappel 8 de la tige de commande, 17 du piston de temporisation 13 et 16 du bouton de temporisation courte 5 sont en position de longueur maximum au repos. La pression de l'eau est présente de part et d'autre du joint 15 porté par le piston 13 grâce à une ou plusieurs rainures de temporisation 11b, le ressort de rappel 17 du piston de temporisation 13 poussant ce piston 13 de telle sorte que le clapet principal 20 soit maintenu contre le siège principal 1c du robinet.

Lorsqu'un utilisateur exerce une pression sur le bouton de temporisation courte 5, celui-ci vient, tout d'abord, au contact de la butée 7 en comprimant son ressort de rappel 16. Puis, le bouton de commande de temporisation courte 5 vient en appui sur le sommet 6f du guide-tige 6, entraînant ainsi un déplacement limité de la tige de commande 12: le clapet auxiliaire primaire 9 quittant son siège auxiliaire primaire 6a libère le canal de décompression primaire 6c entraînant une chute de la pression dans la chambre de temporisation 11a, ce qui provoque la remontée du piston de temporisation 13 poussé vers le haut par la pression de l'eau du réseau sur sa face inférieure : la chambre de temporisation commence alors à se vider par le canal de décompression primaire 6c.

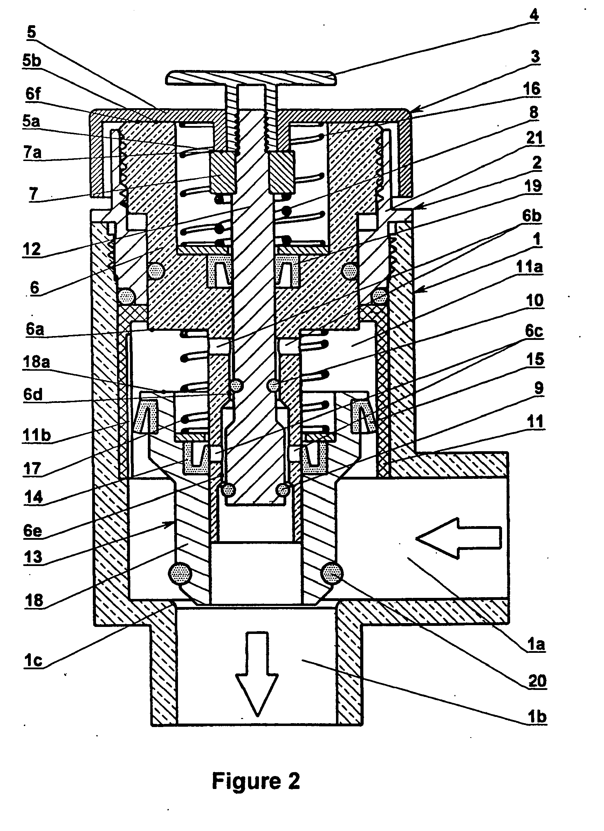

En position fin de remontée du piston en position temporisation courte (figure 2), la libération du canal de décompression primaire 6c permet à la chambre de temporisation 11a de se vider jusqu'à ce que le piston 13 obstrue ce même canal 6c. Dans le présent exemple de réalisation, cette obstruction est réalisée par un joint 14 qui est inséré dans le piston de temporisation 13 et qui coulisse sur le guide-tige 6. Cette obstruction arrête le vidage de la chambre de décompression 11a provoquant ainsi l'arrêt du déplacement du piston de temporisation 13 dont la remontée a libéré le siège principal 1c du clapet 20 permettant au fluide de s'écouler vers la sortie 1 b.

Si on relâche la pression sur le bouton de temporisation courte 5, la tige de commande 12 remonte et le clapet auxiliaire primaire 9 reprend sa place dans le siège auxiliaire 6e fermant ainsi le canal de décompression primaire 6c; la chambre de temporisation 11 commence alors à se remplir lentement par la rainure de temporisation 11b car le piston de temporisation 13 est poussé vers le bas par son ressort de rappel 17 jusqu'à venir obstruer le siège principal 1c par son clapet 20 et, par conséquent, bloquer l'écoulement du fluide.

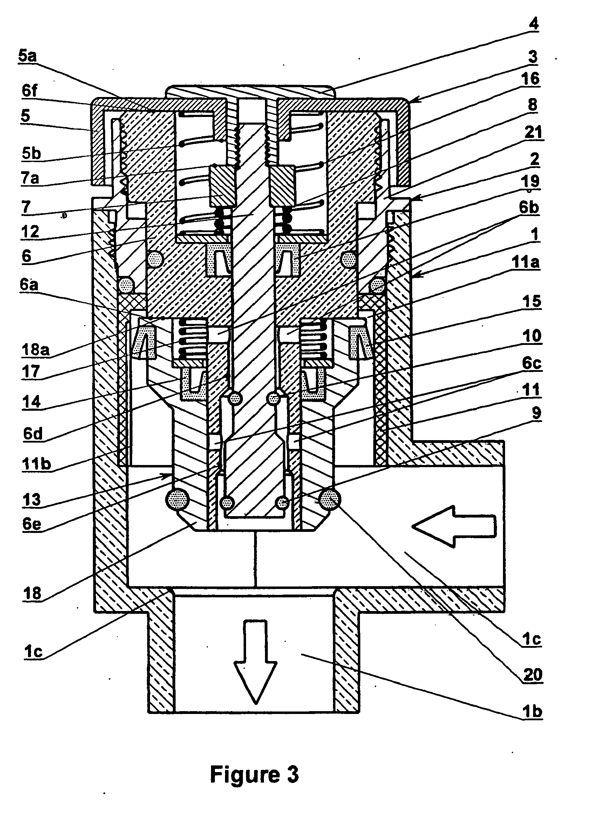

Si l'utilisateur appuie sur le bouton de temporisation longue 4 (figure 3), il provoque un déplacement de la butée 7 et donc de la tige de commande 12 dont elle est solidaire: les clapets auxiliaires primaire 9 et secondaire 10 quittent tous deux leurs sièges auxiliaires respectif, et la chambre de temporisation 11a peut alors se vider par les deux canaux de décompression primaire pour temporisation courte 6c et secondaire pour temporisation longue 6d dans un premier temps, puis par le seul canal de décompression secondaire 6b lorsque le piston de temporisation 13 a obstrué le canal de décompression primaire 6c dans sa remontée.

En position fin de remontée du piston de temporisation 13 en position temporisation longue, la chambre de temporisation 11a s'est vidée jusqu'à ce que ce piston 13 vienne en butée par sa face 18a sur le fond 6a du guide-tige 6; la remontée du piston a libéré le siège principal 1c du clapet 20 permettant au fluide de s'écouler vers la sortie 1b.

Le relâchement du bouton 4 permet à la tige de commande 12 de remonter et aux clapets auxiliaires primaire 9 et secondaire 10 de reprendre leurs places dans leurs sièges auxiliaires respectifs primaire 6e et secondaire 6d en fermant les canaux de décompression primaire 6c et secondaire 6b; la chambre de temporisation 11a commence alors à se remplir lentement par sa rainure de temporisation 11b car le piston de temporisation 13 est poussé, par son ressort de rappel 17, en dilection du siège principal 1c du robinet.

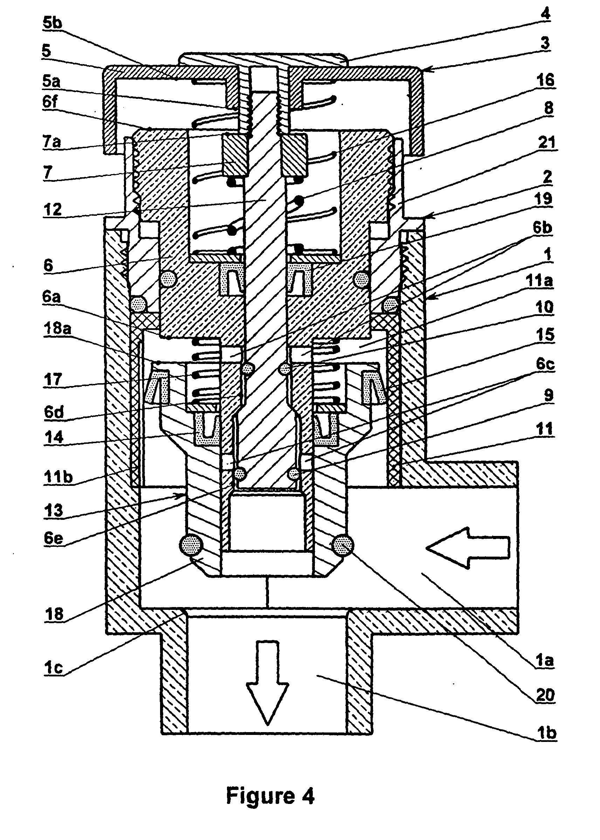

La figure 4 est une vue en coupe longitudinale d'un robinet selon la présente invention en position temporisation longue en cours d'exécution, la chambre de temporisation 11a continue de se remplir lentement par sa ou ses rainures de temporisation 11b, car le piston de temporisation 13 est toujours poussé vers le siège 1c par son ressort de rappel 17 autorisant encore la descente du piston de temporisation 13 jusqu'à venir obstruer le siège 1c par son clapet 20 et bloquer ainsi l'écoulement du fluide.

## Revendications

1. Robinet à déclenchement souple et à double temporisation pour fluide comme, par exemple, pour délivrer de l'eau à des appareils sanitaires tels que des cuvettes water-closets, comprenant un mécanisme disposé dans le corps du robinet (1) comportant un bouton-poussoir (3) avec au moins deux parties actives (4, 5)pour actionner l'ouverture dudit robinet, un chambre de temporisation (11a) limitée par une chemise de temporisation (11) dans laquelle coulisse un piston de temporisation (13) qui porte un clapet principal (20) venant en appui sur un siège principal (1c) dudit robinet et un double système de clapets de décompression permettant deux temporisations différentes, **caractérisé par le fait qu'**il comporte, d'une part, un guide-tige (6) à l'intérieur de laquelle coulisse axialement une tige de commande (12), et dont la partie inférieure renferme des sièges auxiliaires (6e, 6d) dudit robinet, la partie inférieure de ladite tige de commande (12) portant des clapets auxiliaires primaire (9) et secondaire (10), et, d'autre part, deux canaux de décompression primaire (6c) et secondaire (6b) qui sont ménagés dans la partie inférieure dudit guide-tige (6) en amont desdits sièges auxiliaires primaire (6e) et secondaire (6d).

2. Robinet selon la revendication 1, **caractérisé par le fait que** la longueur de la portée du siège auxiliaire primaire (6e) au-dessous du clapet primaire (9) est inférieure à celle de la portée du siège auxiliaire secondaire (6d) du clapet secondaire (10).

3. Robinet selon la revendication 1, **caractérisé par le fait que** le piston de temporisation (13) comporte de manière connue un joint à lèvre (15) faisant effet de joint racleur à l'intérieur de la chemise de temporisation (11) et supporte -un autre joint (14) qui assure l'étanchéité avec la partie inférieure du guide-tige (6) et qui vient obstruer, à un moment, au moins un des canaux de temporisation de la chambre de temporisation.

4. Robinet selon l'une quelconque des revendications 1 à 3, **caractérisé par le fait que** le guide-tige (6) est vissé dans le corps de tête (21) et pénètre dans la chambrer de temporisation (11a) permettant ainsi de faire varier la position de la butée haute (6a) du piston (13), ce qui change la durée de temporisation longue et permet un réglage accessible à l'utilisateur du volume de fluide fourni.

## Claims

1. A tap for fluid, with flexible triggering and dual timing, such as, for example, in order to supply water to sanitary devices such as toilet bowls, comprising a mechanism which is arranged in the body of the tap (1), comprising a push-button (3) with at least two active parts (4, 5) in order to activate the opening of the said tap, a timing chamber (11a) which is delimited by a timing casing (11) in which there slides a timing piston (13) which bears a main valve (20) which is supported on a main seat (1c) of the said tap, and a dual decompression valve system which thus enables two different timings, **characterised in that** it comprises firstly a rod guide (6) inside which a control rod (12) slides axially, and the lower part of which contains auxiliary seats (6e, 6d) of the said tap, the lower part of the said control rod (12) bearing primary (9) and secondary (10) auxiliary valves, and secondly two primary (6c) and secondary (6b) decompression ducts which are provided in the lower part of the said rod guide (6), upstream from the said primary (6e) and secondary (6d) auxiliary seats.

2. A tap according to claim 1, **characterised in that** the length of the range of the primary auxiliary seat (6e) below the primary valve (9) is shorter than that of the range of the secondary auxiliary seat (6d) of the secondary valve (10).

3. A tap according to claim 1, **characterised in that** the timing piston (13) comprises in known manner a lip seal (15) which acts as a wiper ring inside the timing casing (11), and supports another seal (14) which ensures the sealing with the lower part of the rod guide (6), and which, at a given moment, blocks at least one of the timing ducts of the timing chamber.

4. A tap according to any one of claims 1 to 3, **characterised in that** the rod guide (6) is screwed into the head body (21), and penetrates into the timing chamber (11a), thus making it possible to vary the position of the high stop (6a) of the piston (13), which changes the long timing duration and enables regulation which is accessible to the user, of the volume of fluid supplied.

## Patentansprüche

1. Hahn mit geschmeidigem Auslösen und doppelter Verzögerung für Fluid, wie zum Beispiel zum Abgeben von Wasser an Sanitärgeräte, wie zum Beispiel Wasserklosettbecken, der einen Mechanismus aufweist, der in dem Körper des Hahns (1) angeordnet ist, der einen Druckknopf (3) mit mindestens zwei aktiven Teilen (4, 5) aufweist, um das Öffnen des Hahns zu betätigen, eine Verzögerungskammer (11a), die von einem Verzögerungsmantel (11) abgegrenzt ist, in dem ein Verzögerungskolben (13) gleitet, der eine Hauptklappe (20) trägt, die auf einem Hauptsitz (1c) des Hahns zum Anliegen kommt, und ein doppeltes System Dekompressionsklappen, das zwei unterschiedliche Verzögerungen erlaubt, **dadurch gekennzeichnet, dass** er einerseits einen Schaftführer (6) aufweist, in dessen Innerem axial ein Steuerschaft (12) gleitet, und dessen unterer Teil Hilfssitze (6e, 6d) des Hahns einschließt, wobei der untere Teil des Steuerschafts (12) Primärhilfsklappen (9) und Sekundärhilfsklappen (10) trägt, und, andererseits, zwei Kanäle zur Primärdekompression (6c) und Sekundärdekompression (6b), die in dem unteren Teil des Schaftführers(6) stromaufwärts des Primärhilfssitzes (6e) und Sekundärhilfssitzes (6d) eingerichtet sind.

2. Hahn nach Anspruch 1, **dadurch gekennzeichnet, dass** die Länge der Auflage des Primärhilfssitzes (6e) unterhalb der Primärklappe (9) kleiner ist als die der Auflage des Sekundärhilfssitzes (6d) der Sekundärklappe (10).

3. Hahn nach Anspruch 1, **dadurch gekennzeichnet, dass** der Verzögerungskolben (13) auf bekannte Art eine Lippendichtung (15) aufweist, die als Abstreifring im Inneren des Verzögerungsmantels (11) wirkt und eine weitere Dichtung (14) trägt, die die Abdichtung mit dem unteren Teil des Schaftführers (6) sicherstellt und in einem gegebenen Augenblick mindestens einen der Verzögerungskanäle der Verzögerungskammer verschließt.

4. Hahn nach einem der Ansprüche 1 bis 3, **dadurch gekennzeichnet, dass** der Schaftführer (6) in den Kopfkörper (21) geschraubt ist und in die Verzögerungskammer (11a) eindringt und es daher erlaubt, die Position des oberen Anschlags (6a) des Kolbens (13) variieren zu lassen, was die lange Verzögerungsdauer ändert und ein für den Benutzer zugängliches Einstellen des gelieferten Fluidvolumens erlaubt.
